# EUROPEAN PATENT SPECIFICATION

(11) **EP 3 852 302 B1**
(45) Date of publication and mention of the grant of the patent: **30.04.2025**
(21) Application number: 18933398.2
(22) Date of filing: 12.09.2018
(51) Int. Cl.: H04L 9/00, H04L 9/32

(54) **METHOD FOR CREATING A BLOCKCHAIN DIGITAL IDENTITY, BASED ON AN ELECTRONIC SIGNATURE**
VERFAHREN ZUR ERZEUGUNG EINER DIGITALEN BLOCKCHAIN-IDENTITÄT AUF DER BASIS EINER ELEKTRONISCHEN SIGNATUR
PROCÉDÉ POUR LA CRÉATION D'UNE IDENTITÉ NUMÉRIQUE DANS UNE CHAÎNE DE BLOCS BASÉ SUR LA SIGNATURE ÉLECTRONIQUE

(43) Date of publication of application: 21.07.2021
(73) Proprietor: SIGNE, S.A., 28760 Tres Cantos - Madrid (ES); NODALBLOCK, S.L., 28006 Madrid (ES)
(72) Inventor: PINEDO HOYVIK, Antonio, 28760 Tres Cantos - Madrid (ES); CARMONA TAMAYO, Miguel Angel, 28760 Tres Cantos - Madrid (ES); VAZQUEZ SANCHEZ, Andrés, 28760 Tres Cantos - Madrid (ES); SANCHEZ JIMENEZ, Teodoro, 28760 Tres Cantos - Madrid (ES); ESTRADA VILLEGAS, Carina, 28760 Tres Cantos - Madrid (ES); MARTINEZ VIVAS, María José, 28760 Tres Cantos - Madrid (ES); HERNANDEZ HUERTA, Ariano, 28006 Madrid (ES)
(74) Representative: Urizar Anasagasti, Jesus Maria
(86) International application number: PCT/ES2018/070595
(87) International publication number: WO 2020/053453

(56) References cited:
- WO-A1-2018/114587
- WO-A2-2018/085558
- US-A1- 2017 111 175
- US-A1- 2017 237 554
- ALIASLAB: "SignChain - Electronic Advanced BlockChain Signature", VIMEO, 11 April 2016 (2016-04-11), XP055691924, Retrieved from the Internet <URL:https://vimeo.com/190211369> [retrieved on 20190524]

## Description

### OBJECT OF THE INVENTION

The object of the present invention is a method for creating a digital identity which enables compliance of the blockchain identity with the regulations on electronic identification to be guaranteed, giving legal validity to the authentication and traceability of an identity in the blockchain environment.

The method enables a blockchain digital identity to be created which can be verified, thus guaranteeing the validity thereof and the compliance thereof with these regulations.

### TECHNICAL FIELD

The invention falls within the sector of electronic security in general and especially in those occasions wherein an identity is to be guaranteed in electronic transactions and blockchain documents.

### BACKGROUND OF THE INVENTION

Electronic identification is the process of using the identification data of a person in an electronic format which uniquely represents a natural or legal person or a natural person who represents a legal person.

Authentication is an electronic process which makes the electronic identification of a natural or legal person, or of the origin and integrity of data in an electronic format, possible.

An electronic signature certificate is an electronic declaration that links the validation data of a signature with a natural person and confirms, at least, the name or pseudonym of that person.

An electronic signature will have a legal effect equivalent to that of a handwritten signature, according to current legislation applicable to electronic signatures in each country.

The b-KYC (blockchain - Know Your Customer) solution, for the blockchain digital identity, enables a blockchain digital ID to be obtained from a biometric and document identification system that combines Artificial Intelligence (AI) with a revolutionary algorithmic system. With b-KYC, we guarantee reliability and security in digital onboarding by using the authenticity of the official National Identity Document (or passport), proof the person is alive and the three-dimensional biometric facial analysis as an effective anti-impersonation measure.

The electronic signature guarantees the identity of the signer of a document and the authentication on any electronic platform, but it is not capable by itself of guaranteeing the transaction and the immobility of the document.

The digital identity in the blockchain technology guarantees the transaction and the immutability of the document, but it is not capable of guaranteeing by itself compliance with the regulations on electronic identification of the owner of the document and/or transaction.

With the method proposed in the present invention, a blockchain digital identity is created which is associated with the electronic signature, which is able to be validated and, therefore, which guarantees compliance with the regulations on electronic identification of the owner of the document and/or transaction.

The document US 2017/111175 refers to a systems and methods for managing digital identities but does not allow a blockchain digital identity to be created which can be verified, thus guaranteeing the validity thereof and the compliance thereof with these regulations.

### DESCRIPTION OF THE INVENTION

In order to guarantee the traceability and immutability of the document as well as compliance with the regulations on electronic identification of the owner of the transaction and/or document, the merging between the electronic signature digital identity and the blockchain digital identity is presented which we call the qualified blockchain digital identity.

The proposed method is based on the use of the association of the two types of identities in the following manner:

### Creation of the QUALIFIED BLOCKCHAIN DIGITAL IDENTITY

1. Generation of an electronic signature certificate, according to the requirements of the current legislation applicable to electronic signatures in each country, which guarantees the identity of a natural or legal person.
2. Generation and custody in the same process of a symmetrical key without expiration, in the FIPS 140 level-3 HSM (Hardware Security Module).
3. Custody of the relationship between the electronic signature certificate and the symmetrical key, encoded with the master key stored in the FIPS 140 level-3 cryptographic hardware (HSM).
4. Creation of a blockchain identity: An identifier will be generated made up of user data (i.e., country + document type + document) which will be encoded with the symmetrical key in the FIPS 140 level-3 cryptographic hardware HSM (Hardware Security Module) and the hash thereof will be obtained. This hash will be the one that is recorded as a blockchain identity and only the end user will have it in order to perform transactions.
5. Recording in the database the user data and tx-hash resulting from the transaction creating the blockchain identity, encoded with the master key kept in the cryptographic hardware. FIPS 140 level-3 HSM (Hardware Security Module).

### Signing of documents

- The user must authenticate him or herself on the platform by means of their electronic signature certificate or their blockchain identity.
- If the document is signed with an electronic signature certificate, this will enable the signer to be unequivocally identified and will ensure both the integrity and the non-repudiation of the signed document.
- The user will perform the blockchain signature which will link the previously signed document with the QUALIFIED BLOCKCHAIN DIGITAL IDENTITY.
- Every time the user performs a transaction linked to their qualified blockchain digital identity, the platform (blockchain signature engine integrated into the API generating the blockchains) will unite the data of the blockchain signature, a UTC time stamp, the identification data of the signer and their qualified blockchain digital identity and other data, such as the geolocation, if applicable.
- In order to perform the transaction, a hash code of the document, based on the current algorithm, and the blockchain identity will be sent.
- This hash will be recorded in the blockchain network, linking the identity of the signer with the transaction and guaranteeing both the traceability and immutability of the document and the identity of the user who performed the transaction.

### Validation

To validate the transaction of the document, the document or the hash thereof is necessary. If the identity of the person who performed the transaction is to be confirmed, the identification document of that person will be necessary.

The validation is performed with the following steps:
1. If we have the document, the hash thereof will be generated with the current algorithm. We can also directly use the hash of the document.
2. With the hash of the document, the blockchain transaction will be searched for. If it exists, the data (tx_hash) of the transaction and the blockchain identity of the user who performed the transaction are obtained.
3. If the identification document of the owner has been provided, with the data obtained, a search will be performed for the tx_hash of the blockchain identity in the database and it will be confirmed that their identity document matches the one they have provided us.

To ensure that the tx_hash of the signer belongs to that identity document, the following process will be performed:
a) Regeneration of the hash of the blockchain identity (according to point 4 of the creation of the qualified blockchain digital identity of this document)
b) Validation of the regenerated hash in the blockchain network.
c) Comparison of the tx_hash collected from point 2 with the tx_hash received in point 3b. With this, it is verified that the hash is associated with the electronic signature certificate of the person according to the relationship established in the creation of the QUALIFIED BLOCKCHAIN DIGITAL IDENTITY defined in this document.

Any document or transaction performed with the digital identity of the blockchain which guarantees traceability and immutability may be related through processes of searching for the hash with the electronic signature identity, which will guarantee the electronic signature identity that guarantees the identification of the owner of said document or transaction and ensures both the integrity and the non-repudiation of the signed document.

### DESCRIPTION OF THE DRAWINGS

In order to complement the description of the features of the invention and as a preferred practical embodiment thereof, several figures are added which, by way of illustration and not limitation, represent the following:

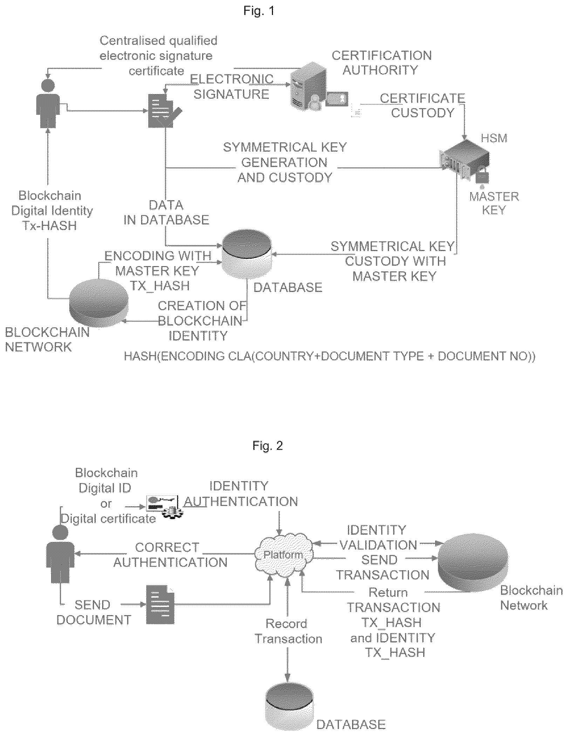

Figure 1 shows a diagram of the process for creating a qualified blockchain digital identity.
Figure 2 represents a diagram of the process of a transaction with the qualified blockchain digital identity.

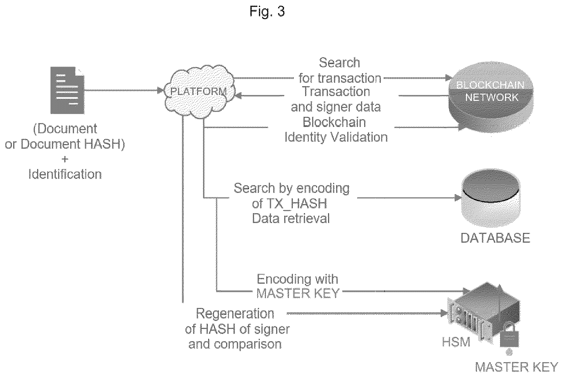

Figure 3 presents a diagram of the validation of the qualified blockchain digital identity of a transaction.

### PREFERRED EMBODIMENT OF THE INVENTION

As seen in the figures, the method for generating and validating a digital identity in blockchain transactions envisages, on the one hand, the generation of the digital identity together with the blockchain transaction with this qualified blockchain digital identity, and on the other hand, the possibility of the validation thereof.

In a preferred embodiment, the method for creating the digital identity in blockchain transactions essentially creates a qualified blockchain digital identity by merging the blockchain digital identity with the electronic signature.

This creation of the qualified blockchain digital identity is performed by means of the following steps:
- generation of an electronic signature certificate, according to the requirements of the current legislation applicable to electronic signatures in each country, which guarantees the identity of a natural or legal person,
- generation and custody in the same process of a symmetrical key without expiration, in the FIPS 140 level-3 HSM (Hardware Security Module),
- custody of the relationship between the electronic signature certificate and the symmetrical key, encoded with the master key stored in the **FIPS** 140 level-3 cryptographic hardware (HSM),
- creation of a blockchain identity by generating an identifier made up of user data which is encoded with the symmetrical key in the **FIPS** 140 level-3 cryptographic hardware **HSM** (Hardware Security Module) and the hash thereof is obtained which is recorded as a blockchain identity and only the end user has it in order to perform transactions,
- recording in the database the user data and the tx-hash resulting from the transaction creating the blockchain identity, encoded with the master key kept in the FIPS 140 level-3 cryptographic hardware HSM (Hardware Security Module),
- signing of the documents which is carried out by means of the following steps:
   i) authentication of the user on the platform by means of their electronic signature certificate or their blockchain identity,
   ii) unequivocal identification of the signer by the platform if the document is signed with an electronic signature certificate ensuring the integrity and the non-repudiation of the signed document,
   iii) the user performing the blockchain signature which links the previously signed document with the qualified blockchain digital identity.
- the platform (blockchain signature engine integrated into the API generating the blockchains) uniting the blockchain signature data of a UTC time stamp, the identification data of the signer and their qualified blockchain digital identity and other data, such as geolocation, every time the user performs a transaction linked to their qualified blockchain digital identity.
- sending a hash code of the document, based on the current algorithm, and the blockchain identity when performing the transaction.
- recording the hash in the blockchain network which links the identity of the signer with the transaction and guarantees both the traceability and immutability of the document and the identity of the user who performed the transaction.

In this preferred embodiment, the method enables a digital identity to be created in the blockchain transactions which enables it to be validated by means of the following process:
a) if the document is available, the hash thereof is generated with the current algorithm or the hash of the document is used directly.
b) with the hash of the document, the blockchain transaction will be searched for and, if it exists, the data (tx_hash) of the transaction and the blockchain identity of the user who performed the transaction are obtained.
c) if the identification document of the owner has been provided, with the data obtained, a search is performed for the tx_hash of the blockchain identity in the database and it is confirmed that their identity document matches the one provided.

Finally, in this preferred embodiment of the creation of the digital identity, in order to ensure that the tx_hash of the signer belongs to that identity document, the following process is performed:
a) Regeneration of the hash of the blockchain identity
b) Validation of the regenerated hash in the blockchain network.
c) Comparison of the tx_hash collected in the validation with the tx_hash received in the validation in the blockchain network of the regenerated hash in the previous point.

Having sufficiently described the nature of the present invention, in addition to an example of implementation, it must be added that the steps of said invention may be modified, provided that it does not imply altering the features claimed below:

## Claims

1. A method for creating a blockchain digital identity based on an electronic signature wherein, in the generation of the digital identity, a qualified blockchain digital identity is created by merging the blockchain digital identity with the electronic signature by means of a process for generating an electronic signature certificate, generating a blockchain identity from the data from the previous step and custody of the relationship between the two identities with high security levels, **characterised in that** the processes for creating the qualified blockchain digital identity are carried out by means of the following steps:
a) generation of an electronic signature certificate, according to the requirements of the current legislation applicable to electronic signatures in each country,
b) generation and custody in the same process of a symmetrical key without expiration, in a FIPS 140 level-3 HSM (Hardware Security Module),
c) custody of the relationship between the electronic signature certificate and the symmetrical key, encoded with a master key stored in the FIPS 140 level-3 cryptographic hardware (HSM),
d) creation of a blockchain identity by generating an identifier made up of user data which is encoded with the symmetrical key in the FIPS 140 level-3 cryptographic hardware HSM (Hardware Security Module) and a tx-hash thereof is obtained which is recorded only in the blockchain network as a blockchain identity and only the end user has it in order to perform transactions,
e) recording in a database only the user data and the tx-hash resulting from the transaction creating the blockchain identity, encoded with the master key kept in the FIPS 140 level-3 cryptographic hardware HSM (Hardware Security Module).

2. The method for creating a blockchain digital identity based on an electronic signature according to claim 1, wherein in that the FIPS 140 level-3 cryptographic hardware HSM (Hardware Security Module) is replaced by the FIPS 140 level-4 cryptographic hardware HSM (Hardware Security Module) or the one established at the time in terms of maximum encryption security.

## Patentansprüche

1. Ein verfahren zur erstellung einer digitalen Blockchain-Identität auf basis einer elektronischen signatur, bei dem bei der generierung der digitalen identität eine qualifizierte digitale Blockchain-Identität erstellt wird, die digitale Blockchain-Identität wird mit der elektronischen signatur mittels eines prozesses zur generierung eines elektronischen signaturzertifikats zusammengeführt. aus den daten des vorherigen schrittes wird eine Blockchain-Identität generiert und die beziehung zwischen den beiden identitäten mit hohen sicherheitsstufen gesichert, die prozesse zur erstellung der qualifizierten digitalen Blockchain-identität erfolgen in den folgenden schritten:
a) generierung eines elektronischen signaturzertifikats gemäß den anforderungen der geltenden gesetzgebung für elektronische signaturen in den einzelnen ländern;
b) generierung und aufbewahrung eines symmetrischen schlüssels ohne ablaufdatum in einem FIPS 140 Level-3-HSM (Hardware Security Module) im selben prozess;
c) aufbewahrung der beziehung zwischen dem elektronischen signaturzertifikat und dem symmetrischen schlüssel, verschlüsselt mit dem im FIPS 140 Level-3-Kryptografie-HSM (Hardware Security Module) gespeicherten hauptschlüssel;
d) erstellung einer blockchain-identität durch generierung einer kennung aus benutzerdaten, die mit dem symmetrischen schlüssel im FIPS 140 Level-3-Kryptografie-HSM (Hardware Security Module) verschlüsselt wird. der daraus gewonnene hash wird ausschließlich im Blockchain-Netzwerk als Blockchain-Identität gespeichert und steht ausschließlich dem endnutzer zur durchführung von transaktionen zur verfügung;
e) speicherung der benutzerdaten und des aus der transaktion resultierenden transaktions-hashes in einer datenbank zur erstellung der Blockchain-Identität, verschlüsselt mit dem im FIPS 140 Level-3-Kryptografie HSM (Hardware Security Module).

2. Verfahren zur erstellung einer digitalen Blockchain-Identität basierend auf einer elektronischen signatur nach anspruch 1, wobei das FIPS 140 Level-3 kryptografische Hardware-HSM (Hardware Security Module) durch ein FIPS 140 Level-4 kryptografisches Hardware-HSM (Hardware Security Module) oder ein anderes, zum jeweiligen zeitpunkt etabliertes HSM (Hardware Security Module) mit maximaler verschlüsselungssicherheit ersetzt wird.

## Revendications

1. Procédé de création d'une identité numérique blockchain basée sur une signature électronique, lors de la génération de l'identité numérique, une identité numérique blockchain qualifiée est créée par fusion de l'identité numérique blockchain et de la signature électronique au moyen d'un processus de génération d'un certificat de signature électronique, de génération d'une identité blockchain à partir des données de l'étape précédente et de conservation de la relation entre les deux identités avec des niveaux de sécurité élevés, ce procédé est **caractérisé en ce que** les processus de création de l'identité numérique blockchain qualifiée sont réalisés selon les étapes suivantes :
a) génération d'un certificat de signature électronique, conformément aux exigences de la législation en vigueur applicable aux signatures électroniques dans chaque pays ;
b) génération et conservation, au cours du même processus, d'une clé symétrique sans expiration, dans un module de sécurité matériel (HSM) FIPS 140 de niveau 3 ;
c) conservation de la relation entre le certificat de signature électronique et la clé symétrique, codée avec une clé principale stockée dans le matériel cryptographique (HSM) FIPS 140 de niveau 3 ;
d) création d'une identité blockchain par génération d'un identifiant composé de données utilisateur. Encodée avec la clé symétrique du module matériel de sécurité cryptographique (HSM) FIPS 140 de niveau 3, son hachage de transaction est obtenu. Ce hachage est enregistré uniquement dans le réseau blockchain comme identité blockchain et seul l'utilisateur final le possède pour effectuer des transactions.
e) enregistrer dans une base de données uniquement les données utilisateur et le hachage de transaction résultant de la transaction créant l'identité blockchain, encodé avec la clé principale conservée dans le module matériel de sécurité cryptographique (HSM) FIPS 140 de niveau 3.

2. Procédé de création d'une identité numérique blockchain basée sur une signature électronique selon la revendication 1, dans lequel le module matériel de sécurité cryptographique (HSM) FIPS 140 de niveau 3 est remplacé par le module matériel de sécurité cryptographique (HSM) FIPS 140 de niveau 4 ou celui établi à ce moment en termes de sécurité de chiffrement maximale.
